# EUROPEAN PATENT APPLICATION

(11) **EP 2 306 366 A1**
(43) Date of publication of application: **06.04.2011**
(21) Application number: 09012461.1
(22) Date of filing: 01.10.2009
(51) Int. Cl.: G06K 9/00, G06K 9/64

(54) **Vision system and method for a motor vehicle**

(71) Applicant: Autoliv Development AB, 44783 Vårgårda (SE)
(72) Inventor: Roll, Jacob, 58216 Linköping (SE)
(74) Representative: Müller Verweyen

(57) **Abstract**

A vision system (10) for a motor vehicle comprises an imaging means (11) adapted to record images from a region surrounding a motor vehicle, and an image processing means (15, 16) comprising a spot detection means (20) adapted to detect bright spots (37) in images recorded by said imaging means, said image processing means being adapted to define regions-of-interest containing said spots in the recorded images, and to perform image processing in said regions-of-interest in order to detect an object in said recorded images. The spot detection means (20) is adapted to apply a convolution operation (30) to said recorded images with a kernel image (31) comprising a predetermined geometrical pattern (32).

## Description

The invention relates to a vision system for a motor vehicle, comprising an imaging means adapted to record images from a region surrounding a motor vehicle, and an image processing means comprising a spot detection means adapted to detect bright spots in images recorded by said imaging means, said image processing means being adapted to define regions-of-interest containing said spots in the recorded images, and to perform image processing in said regions-of-interest in order to detect an object in said recorded images.

In a vision system for a motor vehicle it is usual, in view of the limited on-board processing capabilities, to identify parts of the recorded images where objects to be detected may be supposed as regions-of interest (ROI), and to restrict further image processing to the identified regions-of-interest. Regions-of-interest may for example be identified by detecting bright spots in the recorded images, i.e. spots which are brighter than their surrounding, and to define regions-of-interest including the detected bright spots. A standard method of detecting bright spots involves the application of a Hough transform to the recorded images. However this method is relatively slow and therefore consumes large processing resources.

The object of the invention is to provide a vision system which is capable of detecting objects in a region surrounding a motor vehicle in a reliable and efficient manner.

The invention solves this object with the features of the independent claims. Spot detection based on a convolution algorithm can be implemented much faster than a conventional algorithm based on a Hough transform, which contributes to an enhanced efficiency of the image processing with the limited processing capabilities present in a motor vehicle.

Preferably the predetermined geometrical pattern is essentially composed of a line-shaped pattern. In this case the kernel image may contain many zeros and the spot detection algorithm can be made faster in comparison to e.g. a kernel image composed of a full object, like a full circle.

Since the detection of circular or elliptical spots is in many cases preferred for defining regions-of-interest, the predetermined geometrical pattern is preferably essentially composed of an arc-shaped pattern, more preferably a circular arc, in particular an integer fraction of a circular arc, for example a half circular arc. However, the invention is not strictly limited to the detection of circular or elliptically shaped spots. Other spot shapes to be detected are possible as well, for example rectangular or polygonal spots.

Preferably gradient images of the recorded images are calculated prior to the convolution operation. Depending on the shape of the kernel image it may be preferable to calculate gradient images in different, in particular orthogonal directions. Preferably the gradient images are decomposed into positive and negative parts before the convolution operation is applied to all of the resulting processed images. Finally, the convolved images corresponding to one initial recorded image are preferably summed up before applying a threshold criterion in order to determine bright spots. The afore-mentioned steps of calculating gradient images and decomposing into positive and negative parts aim at approximating a Hough transform, which renders good results in principle, by a fast convolution algorithm.

In the following the invention shall be illustrated on the basis of preferred embodiments with reference to the accompanying drawings, in which:
- Fig. 1: a schematic drawing of a vision system in a motor ve- hicle;
- Fig. 2: a kernel image according to the invention; and
- Figs. 3A-3F: a series of images demonstrating the spot de- tection process.

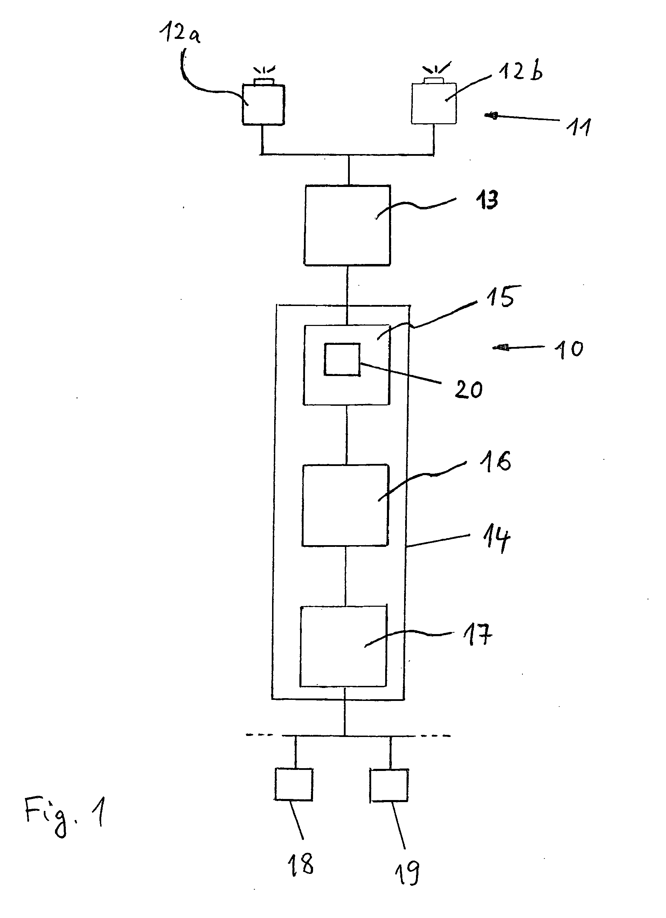

The safety/vision system 10 shown in Fig. 1 is mounted in a motor vehicle and comprises an imaging means 11 for recording images of a region surrounding the motor vehicle, for example a region in front of the motor vehicle. Preferably the imaging means 11 comprises one or more optical and/or infrared imaging devices 12a, 12b, in particular cameras, where infrared covers near IR with wavelengths below 5 microns and/or far IR with wavelengths beyond 5 microns. Preferably the imaging means 11 comprises a plurality imaging devices 12a, 12b in particular forming a stereo imaging means 11; alternatively only one imaging device forming a mono imaging means can be used.

The cameras 12a, 12b are coupled to an image pre-processor 13 adapted to control the capture of images by the cameras 12a, 12b, receive the electrical signal containing the image information from the cameras 12a, 12b, warp pairs of left/right images into alignment and create disparity images, which per se is known in the art. The image pre-processor 13 may be realized by a dedicated hardware circuit. Alternatively the pre-processor 13, or part of its functions, can be realized in the electronic processing means 14.

The pre-processed image data is then provided to an electronic processing means 14 where further image and data processing is carried out by corresponding software. In particular, the processing means 14 comprises a region-of-interest (ROI) definition means 15, an object detection and tracking means 16 adapted to identify and classify possible objects in front of the motor vehicle, such as pedestrians, other vehicles, bicyclists or large animals, and to track over time the position of object candidates in the recorded images, and a decision means 17 adapted to activate or control vehicle safety means 18, 19, ... depending on the result of the processing in the object detection and tracking means 16. The vehicle safety means 18, 19, ... may comprise a warning means 18 adapted to provide a collision warning to the driver by suitable optical, acoustical and/or haptical warning signals; display means 19 for displaying information relating to an identified object; one or more restraint systems such as occupant airbags or safety belt tensioners, pedestrian airbags, hood lifters and the like, and/or dynamic vehicle control systems such as brakes.

The electronic processing means 14 is preferably programmed or programmable and may comprise a microprocessor or microcontroller. The image pre-processor 13 and the electronic processing means 14 are preferably realised in an on-board electronic control unit (ECU) and may be connected to the cameras 12a, 12b via a separate cable or alternatively via a vehicle data bus. In another embodiment the ECU and a camera 12a, 12b can be integrated into a single unit. All steps from imaging, image pre-processing, image processing to activation or control of safety means 18, 19, ... are performed automatically and continuously during driving in real time.

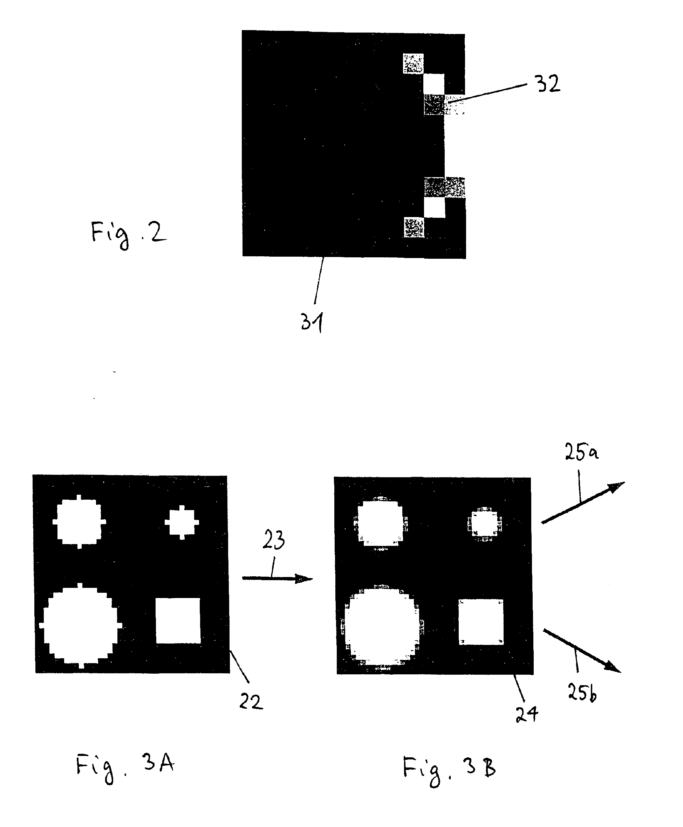

The ROI definition means 15 comprises a spot detection means 20. The spot detection means 20 is adapted to determine bright spots of predetermined size and shape in the recorded images. In the following the process performed in the spot detection means 20 is described with reference to Figs. 2, 3A to 3F.

Fig. 3A shows an example of an artificial recorded image 22 containing four spots of different size and shape. It shall be assumed that the spot detection means 20 is intended to determine approximately circle-like bright spots with a size approximately corresponding to the size of the upper left spot in Fig. 3A, whereas the upper right circle is too small and the lower left circle is too big to be identified. The lower right square, although not having a circular shape, is nevertheless on the border of being detected as an approximately circle-like bright spot, demonstrating that the detection algorithm covers a certain range of shapes and sizes around the ideal shape and size.

After the image 22 recorded by the cameras 12a, 12b is input to the spot detection means 20, a low-pass filtering step 23 symbolized by an arrow between Figs. 3A and 3B is applied to the image 22 in order to reduce the effects of noise. The resulting filtered image 24 is shown in Fig. 3B.

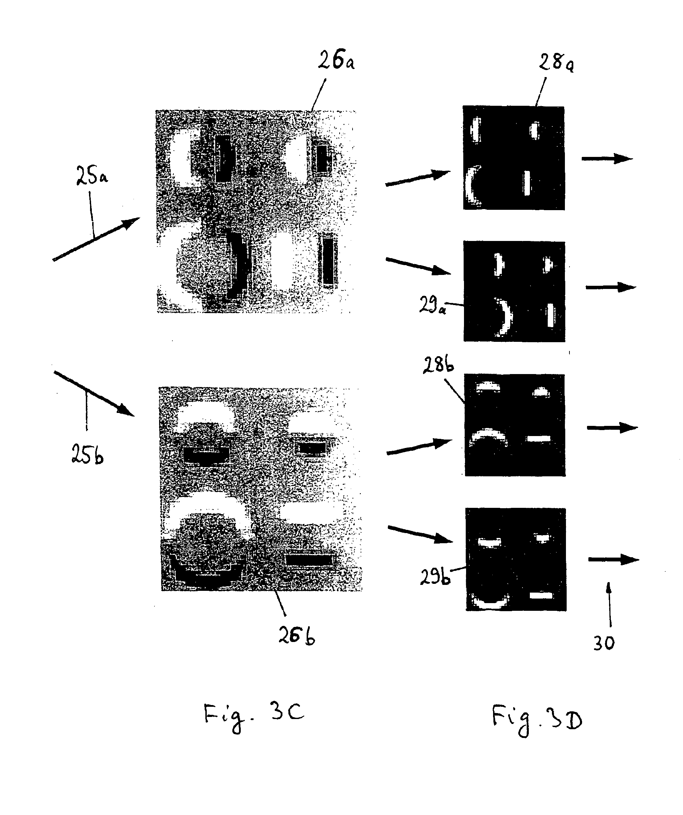

From the filtered image 24 gradient images 26a, 26b in the x-and y-directions, which are shown in Fig. 3C, are then calculated by corresponding derivative steps 25a, 25b. Each gradient image 26a, 26b is the decomposed in its positive part 28a, 28b and its negative part 29a, 29b.

Each of the resulting images 28a, 28b, 29a, 29b is then separately convolved in a corresponding convolution operation 30 with a kernel image 31, an example of which is shown in Fig. 2. The kernel image 31 is a multi-pixel, preferably rectangular image, in particular a square image formed of n x n pixels, where n is an integer value with a magnitude of at least 5, here for example n=11. The kernel image 31 comprises a convex half-circular arc 32, in the example shown in Fig. 2 arranged in the right half of the kernel image 31, which is preferably composed of greyscale pixels and has a line thickness in a preferred range of one to five pixels, more preferably one to three pixels. The rest of the pixels of the kernel image 31 may be set to zero, which is represented by black pixels in Fig. 2.

The kernel image 31 may be preferably rotated and/or mirrored in order to cover all different orientations of the arc-shaped pattern 32. In the example shown in Fig. 3D, the image 28a is convolved by a kernel image generated from the kernel image shown in Fig. 2 by a 180° rotation in order to detect half-circular arcs facing to the left; the image 29a is convolved by the kernel image shown in Fig. 2 in order to detect half-circular arcs facing to the right; the image 28b is convolved by a kernel image generated from the kernel image shown in Fig. 2 by a 270° clockwise rotation in order to detect half-circular arcs facing upwards; and the image 29b is convolved by a kernel image generated from the kernel image shown in Fig. 2 by a 90° clockwise rotation in order to detect half-circular arcs facing downwards. Each rotated and/or mirrored kernel image 31 gives estimates of where the corresponding circle centre could be.

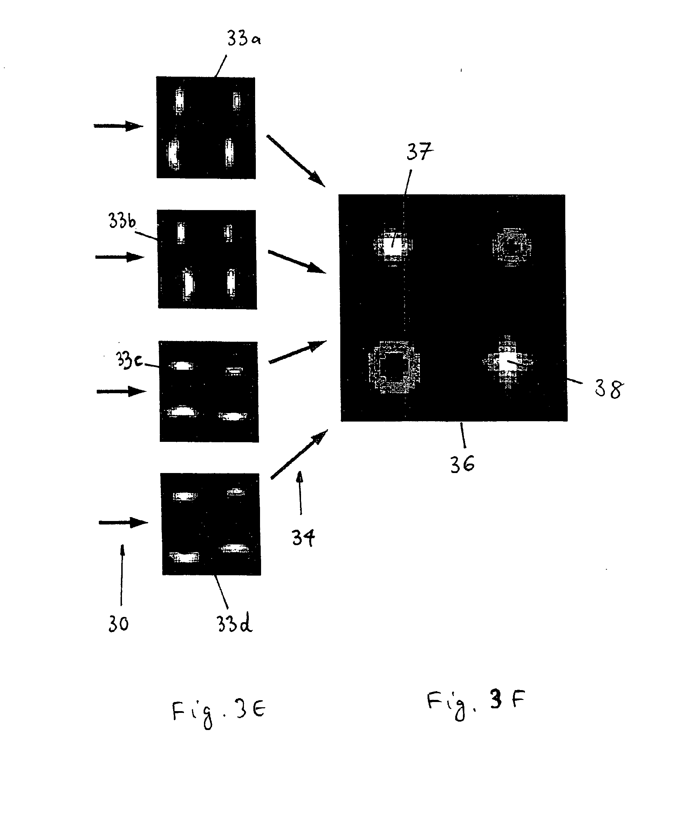

All convolved images 33a to 33d shown in Fig. 3E are then summed up in an addition step 34 to form a final convolved image 36 shown in Fig. 3F. By summing up the contributions from all rotated and/or mirrored kernel images 31, the spots corresponding to a real circle centre of approximately correct size gets contributions from all above-mentioned estimates and therefore higher brightness values. The final convolved image 36 is then compared to a predetermined threshold in order to determine objects 37 representing bright spots in a predetermined size range and shape range in the recorded image shown in Fig. 3A, thus ruling out other image structures not having approximately the desired brightness, size or shape. However, the lower right square spot in Fig. 3A leads to a sufficiently bright object 38 in Fig. 3F in order yet to be identified as corresponding to an approximately circular spot of approximately correct size.

The spot detection process shown in Figs. 3A to 3F may then be repeated for different scales, in order to find spots in a different size range, and/or for images sub-sampled or scaled in only one direction (x or y) in order to detect ellipse-like spots in addition to or alternatively to circle-like spots. The result of all spot detection processes is then expediently merged into a single image.

Finally the ROI definition means 15 is adapted to define regions-of-interest in the recorded images by identifying clusters of bright spots 37 detected by the spot detection means 20, such that the regions-of-interest include those clusters of bright spots 37. The further image processing in the object detection and tracking means 16 is then restricted to these regions-of-interest which contributes to efficient use of processing resources.

## Claims

1. A vision system (10) for a motor vehicle, comprising an imaging means (11) adapted to record images from a region surrounding a motor vehicle, and an image processing means (15, 16) comprising a spot detection means (20) adapted to detect bright spots (37) in images recorded by said imaging means, said image processing means being adapted to define regions-of-interest containing said spots in the recorded images, and to perform image processing in said regions-of-interest in order to detect an object in said recorded images, **characterized in that** said spot detection means (20) is adapted to apply a convolution operation (30) to said recorded images with a kernel image (31) comprising a predetermined geometrical pattern (32).

2. The vision system according to claim 1, wherein said predetermined geometrical pattern (32) is essentially composed of a line-shaped pattern.

3. The vision system according to claim 1 or 2, wherein said predetermined geometrical pattern (32) is essentially composed of an arc-shaped pattern.

4. The vision system according to any one of the preceding claims, wherein said predetermined geometrical pattern (32) is essentially composed of a circular arc.

5. The vision system according to any one of the preceding claims, wherein said predetermined geometrical pattern (32) is essentially composed of an integer fraction of a circular arc.

6. The vision system according to any one of the preceding claims, wherein said predetermined geometrical pattern (32) is essentially composed of a half circular arc.

7. The vision system according to any one of the preceding claims, wherein said spot detection means (20) is adapted to calculate a gradient image (26a, 26b) of said recorded images prior to said convolution operation (30).

8. The vision system according to claim 7, wherein said spot detection means (20) is adapted to calculate gradient images (26a, 26b) of said recorded images in different directions.

9. The vision system according to claims 7 and 8, wherein said spot detection means (20) is adapted to decompose said gradient images (26a, 26b) into positive and negative parts (28a, 28b, 29a, 29b) prior to said convolution operation (30).

10. The vision system according to any one of the preceding claims, wherein said spot detection means (20) is adapted to perform a scaling operation in one or more directions to said recorded images.

11. The vision system according to any one of the preceding claims, wherein said spot detection means (20) is adapted to perform a filtering operation (23) to said recorded images prior to said convolution operation (30).

12. The vision system according to any one of the preceding claims, wherein said spot detection means (20) is adapted to use rotated and/or mirrored kernel images (31) in said convolution operation (30).

13. The vision system according to any one of the preceding claims, wherein said spot detection means (20) is adapted to sum up all convolved images (33a-33d) corresponding to one initial recorded image (22).

14. The vision system according to any one of the preceding claims, wherein said spot detection means (20) is adapted to discriminate the convolved image (36) against a threshold.

15. A vision method for a motor vehicle, comprising the steps of recording images from a region surrounding a motor vehicle, detecting bright spots (37) in images recorded by said imaging means, defining regions-of-interest containing said spots (37) in the recorded images, and to perform image processing in said regions-of-interest in order to detect an object in said recorded images, **characterized by** the step of applying, in said spot detection, a convolution operation (30) to said recorded images with a kernel image (31) comprising a predetermined geometrical pattern (32).
